# FASCICULE DE BREVET EUROPEEN

(11) **EP 3 325 303 B1**
(45) Date de publication et mention de la délivrance du brevet: **01.09.2021**
(21) Numéro de dépôt: 16750934.8
(22) Date de dépôt: 07.07.2016
(51) Int. Cl.: B60K 15/03, B60K 15/063, B60S 1/50, B60S 1/48

(54) **ENSEMBLE DE RÉSERVOIRS POUR VÉHICULE AUTOMOBILE**
TANKSATZ FÜR KRAFTFAHRZEUG
SET OF TANKS FOR MOTOR VEHICLE

(30) Priorité: 23.07.2015 FR 1556975
(43) Date de publication de la demande: 30.05.2018
(73) Titulaire: Renault s.a.s, 92100 Boulogne-Billancourt (FR)
(72) Inventeur: CRUZ, Rafael, Curitiba (BR); SOUZA, Rodrigo, 80140-080 Curitiba (BR); PRAT, Martin, Cordoba (AR); NOMURA, Rui, 80630-280 Curitiba (BR)
(86) Numéro de dépôt international: PCT/FR2016/051733
(87) Numéro de publication internationale: WO 2017/013324

(56) Documents cités:
- WO-A1-2009/010689
- US-A1- 2015 108 138

## Description

La présente invention se rapporte à un ensemble de réservoirs pour véhicule automobile.

Dans le domaine des véhicules automobiles à moteur à combustion interne, il existe des véhicules monocarburant fonctionnant avec un seul type de carburant, par exemple de l'essence ou du gazole, alors que d'autres véhicules automobiles dits polycarburants peuvent fonctionner avec des mélanges de carburants, tel qu'un mélange d'essence et d'éthanol. Ce dernier type de moteur est connu sous l'appellation « flex fuel », on se réfèrera à cette technologie dans le présent document sous le terme simplifié de flex ou moteur flex.

Les moteurs flex peuvent fonctionner tant en mélangeant les carburants qu'en utilisant un seul type de carburant admissible, par exemple en utilisant 100% d'éthanol.

Un problème connu des moteurs flex est d'avoir des difficultés à démarrer lorsque le réservoir est rempli en majorité d'éthanol et alors que la température ambiante est inférieure à 15°C environ.

Pour pallier ce problème, il est connu d'installer dans le véhicule automobile, un réservoir additionnel d'essence, permettant de fournir au moteur une petite quantité d'essence permettant au moteur de démarrer dans les conditions énoncées au paragraphe précédent, connue sous le terme de « démarrage à froid ».

Le réservoir additionnel d'essence, qui est rempli exclusivement d'essence, est généralement installé proche du réservoir de liquide lave-glace dans le compartiment moteur, de manière à pouvoir être facilement accessible par l'utilisateur du véhicule.

Il peut être parfois nécessaire de redéfinir le réservoir de liquide lave-glace spécifiquement pour les versions de motorisation polycarburant par rapport à la version monocarburant, qui ne nécessite pas de réservoir de démarrage à froid. Il est alors nécessaire d'effectuer la production de différentes versions de réservoirs de liquide lave-glace pour les différentes versions de motorisation, ce qui augmente les coûts de fabrication. US2015108138 A1 indique un état de la technique pertinent.

On connait notamment dans l'art antérieur, le document US 6,026,974 relatif à un module de réservoir d'essence, formé d'une partie de fond et d'un couvercle, et comportant une empreinte dans laquelle est adapté à être logé un deuxième module de réservoir plus petit. Le deuxième module de réservoir vient se fixer directement sur le premier module de réservoir, sans modifier le volume d'encombrement global pour ces deux modules de réservoirs dans le véhicule automobile.

Cependant, une telle solution impose une géométrie complexe des modules de réservoir, ce qui induit des coûts de fabrication relativement élevés.

En outre, l'installation et la maintenance du deuxième module de réservoir peut être relativement longue et complexe dans la mesure où un tel agencement limite l'accessibilité au deuxième module lorsqu'il est monté dans le premier module.

Dans ce contexte, il existe un besoin pour un ensemble de réservoirs modulaires palliant les inconvénients précités.

On propose un ensemble de réservoirs pour véhicule automobile, comprenant un premier réservoir formé par une première partie de fond et un premier couvercle assemblé avec ladite partie de fond.

La première partie de fond est obtenue d'une pièce avec un premier organe de fixation apte à fixer le premier réservoir au véhicule, le premier organe de fixation comprenant une deuxième partie de fond adjacente à la première partie de fond et s'étendant à l'extérieur du premier réservoir, et un élément d'accrochage solidaire de ladite deuxième partie de fond, ladite deuxième partie de fond comprenant un bord libre apte à recevoir un deuxième couvercle pour former un deuxième réservoir.

Ainsi, on peut obtenir un ensemble de réservoirs pouvant être configuré pour des véhicules à motorisations différentes, par exemple monocarburant et flex fuel. Notamment, on peut configurer l'ensemble de réservoirs pour ajouter un réservoir d'essence additionnel, sans avoir à redéfinir les points de fixation de l'ensemble de réservoir dans le véhicule automobile et sans augmenter le volume d'encombrement dans le compartiment moteur, que ce soit dans la première configuration ou dans la deuxième configuration.

En outre, il n'est pas nécessaire de fabriquer des moules de parties de fond différents, selon la motorisation du véhicule automobile.

Ainsi, on optimise les coûts de fabrication, notamment par l'utilisation de parties de fond communes aux deux configurations possibles.

On optimise aussi le temps d'installation de l'ensemble de fixation, par une définition unique des points de fixation, et par la simplicité pour passer de la première configuration à la deuxième configuration.

Selon l'invention les première et deuxième parties de fond comprennent chacune une paroi latérale respectivement en regard l'une de l'autre et maintenues à distance par une fine langue de matière solidaire des parois latérales.

Ainsi on permet une séparation physique des deux parties de fond, de manière à séparer les deux réservoirs lorsqu'ils sont tous les deux formés. De cette manière on peut améliorer l'accessibilité aux réservoirs et simplifier la géométrie de chacun des réservoirs.

Par le terme fine langue, on entend une langue présentant une largeur comprise entre 2 mm et 2.5 mm. Une fine langue de matière présente une forme principalement plate, par exemple plane, plus longue que large.

La fine langue de matière s'étend avantageusement, entre les deux parties de fond dans le sens de sa largeur.

En particulier, la largeur de la langue est dimensionnée de manière à maintenir les deux parties de fond proches l'une de l'autre.

Avantageusement et de manière non limitative, la fine langue de matière comprend des nervures s'étendant dans une direction sensiblement perpendiculaire à un plan dans lequel s'étend la langue de matière, de manière à renforcer la solidarisation entre les paroi latérale des première et deuxième parties de fond.

Avantageusement et de manière non limitative, dans une première configuration, l'ensemble de réservoirs est monté dans le véhicule automobile sans le deuxième couvercle. De cette manière l'ensemble de réservoir est particulièrement adapté aux véhicules monocarburant ne nécessitant pas de réservoir additionnel de carburant. Ainsi il n'est pas nécessaire de former le deuxième réservoir avec un deuxième couvercle, ce qui permet une réduction des coûts de fabrication et une réduction du temps de montage de l'ensemble de réservoirs.

Ainsi, la première configuration définit un réservoir destinée à être montée dans un véhicule monocarburant, tel que de l'essence ou du gazole, le réservoir étant destiné à recevoir un liquide lave-glace. Ainsi, le premier réservoir est systématiquement utilisé par le véhicule automobile quelque soit le type de motorisation.

Avantageusement et de manière non limitative, dans la première configuration, la deuxième partie de fond présente une ouverture traversante adaptée pour évacuer toute substance liquide pouvant s'accumuler dans ladite deuxième partie de fond. Ainsi, on peut éviter qu'un liquide, par exemple de l'eau de pluie, ne s'accumule dans la deuxième partie de fond, inutilisée dans la première configuration.

Avantageusement et de manière non limitative, dans une deuxième configuration, l'ensemble de réservoirs est monté dans le véhicule automobile avec le deuxième couvercle, le deuxième réservoir formé par la deuxième partie de fond et le deuxième couvercle étant adapté pour recevoir une quantité de carburant permettant un démarrage à froid du véhicule automobile.

La deuxième configuration définit deux réservoirs destinés à être montés dans un véhicule polycarburant, tel qu'un véhicule à motorisation flex fuel, le premier réservoir étant destiné à recevoir un liquide lave-glace, et le deuxième réservoir étant destiné à recevoir une quantité d'essence permettant le démarrage à froid du véhicule automobile. Ainsi, on peut ajouter un réservoir d'essence additionnel à l'ensemble de réservoirs dans cette deuxième configuration, sans avoir à changer la structure du premier réservoir par rapport à la première configuration.

Autrement dit, le passage de la première configuration à la deuxième configuration s'effectue sans modifier la structure du premier réservoir.

Avantageusement et de manière non limitative, le deuxième réservoir comprend une pompe à carburant pour alimenter le moteur en carburant lors du démarrage à froid, et un col formé par la jonction d'un bord libre du deuxième couvercle sur le bord libre de la deuxième partie de fond et une bouche de remplissage ménagée dans le deuxième couvercle.

Avantageusement et de manière non limitative, le deuxième réservoir comprend un capteur de niveau de carburant.

Avantageusement et de manière non limitative, le premier réservoir comprend une pompe à eau et une bouche de remplissage, ladite bouche de remplissage étant apte à recevoir un bouchon de fermeture étanche.

Avantageusement et de manière non limitative, le col de remplissage est formée par la jonction d'un bord libre de la première partie de fond avec un bord libre du premier couvercle et la bouche de remplissage est ménagée dans le premier couvercle.

Avantageusement et de manière non limitative, la partie de fond du premier réservoir et le premier organe de fixation sont obtenus d'une pièce par moulage par injection plastique.

L'invention concerne aussi un véhicule automobile comprenant un ensemble de réservoirs tel que décrit précédemment

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est un vue en perspective d'un ensemble de réservoirs dans une première configuration pour véhicule à motorisation flex fuel, selon un mode de réalisation de l'invention;
- la figure 2 est une vue en perspective d'un ensemble de réservoirs selon le mode de réalisation de la figure 1, dans une deuxième configuration pour véhicule à motorisation monocarburant ;
- la figure 3 est une vue en perspective d'un ensemble de réservoirs selon le mode de réalisation de la figure 1, dans la première configuration, vue du dessous lorsque l'ensemble est monté dans le compartiment moteur du véhicule automobile.

Dans la présente description, les termes avant, arrière, supérieur, inférieur, font référence aux directions avant et arrière du véhicule, lorsque l'ensemble de réservoirs est monté sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

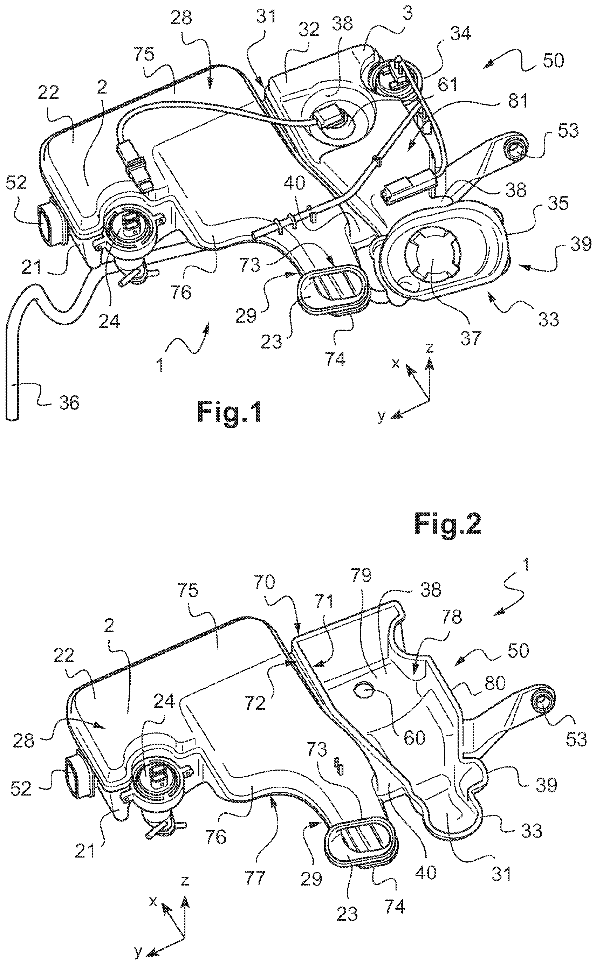

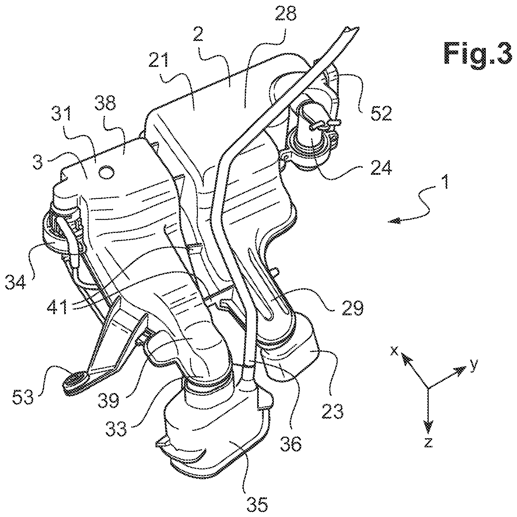

Les figures 1 à 3 se rapportant à un même mode de réalisation de l'invention, elles seront commentées simultanément.

Un ensemble de réservoirs 1 comprend un premier réservoir 2 destiné à être monté dans un véhicule automobile.

Le premier réservoir 2 est ici un réservoir pour recevoir un liquide lave-glace.

Le premier réservoir 2 est ici obtenu dans un matériau plastique, mais peut être obtenu en toute matière adaptée, par exemple un métal, par exemple un métal inoxydable, un matériau polymère, etc.

Le premier réservoir 2 définit un volume de stockage d'environ 3 litres dans ce mode de réalisation, ce qui est une quantité suffisante pour du liquide lave-glace en conditions d'utilisation normales. Cependant, en fonction du type de véhicule automobile et en fonction du volume alloué à ce réservoir dans le compartiment moteur, on pourra prévoir un volume de réservoir plus important ou plus faible.

Le premier réservoir 2 est formé par une première partie de fond 21 et un premier couvercle 22.

Le premier couvercle 22 présente une forme adaptée être assemblé sur la première partie de fond 21.

Ici, le premier couvercle 22 comprend une surface principale 75 destinée à s'étendre dans un plan latéral longitudinal lorsque l'ensemble de réservoirs 1 est monté dans le véhicule automobile. La surface principale 75 du premier couvercle est bordée par des parois latérales 76 s'étendant localement dans une direction sensiblement perpendiculaire à la surface principale 75.

Les parois latérales 76 du premier couvercle forment un bord libre, non représenté, du premier couvercle 22.

De manière similaire, la première partie de fond 21 comprend une surface de fond principale, non représentée, destinée à s'étendre dans un plan latéral longitudinal lorsque l'ensemble de réservoirs 1 est monté dans le véhicule automobile. La surface de fond principale de la première partie de fond est bordée par des parois latérales 77 s'étendant localement dans une direction sensiblement perpendiculaire à la surface de fond principale.

Les parois latérales 77 de la première partie de fond forment un bord libre, non représenté, de la première partie de fond 21.

Le premier réservoir 2 est formé par la jonction, étanche, du bord libre du premier couvercle 22 au bord libre de la première partie de fond 21.

Dans ce mode de réalisation, le premier réservoir 2 comprend une partie de stockage 28, un col 29 et une bouche de remplissage 23 ; le col 29 s'étendant entre la partie de stockage 28 et la bouche de remplissage 23.

La partie de stockage 28 présente une forme sensiblement de parallélépipède rectangle. La partie de stockage est destinée à s'étendre dans sa longueur principale, lorsque le premier réservoir 2 est monté dans le véhicule automobile, dans une direction sensiblement transversale.

Le col 29 s'étend depuis un bord de la partie de stockage 28 dans une direction sensiblement perpendiculaire à la direction de la longueur de la partie de stockage 28. Autrement dit, lorsque le premier réservoir 2 est monté dans le véhicule automobile, le col 29 s'étend dans une direction sensiblement longitudinale.

En particulier, lorsque le premier réservoir 2 est monté dans le véhicule, le col 29 s'étend de telle sorte que la bouche de remplissage 23 est orientée vers l'avant du véhicule automobile par rapport à la partie de stockage 28.

Le col 29 présente une forme sensiblement courbe, de manière à relever la bouche de remplissage dans une position sensiblement verticale, ou oblique, lorsque le premier réservoir 2 est monté dans le véhicule automobile. Ceci permettant un remplissage manuel du réservoir 2 plus simple pour l'utilisateur du véhicule automobile.

L'assemblage des bords libres de la première partie de fond 21 et du premier couvercle 22 forment le col 29, la bouche de remplissage 23 étant quant à elle formée dans le premier couvercle 22.

Ainsi, le col 29 n'est formé que lorsque le premier couvercle 22 referme la première partie de fond 21.

La bouche de remplissage 23 peut être fermée par un bouchon, non représenté, de manière amovible, ce qui permet de refermer le premier réservoir 2 préférentiellement de manière étanche.

Le premier réservoir 2 comprend en outre une pompe à eau 24 permettant d'en extraire l'eau. Il sera préféré une pompe à eau à déclenchement électrique.

La pompe à eau 24 comprend une ou deux buse reliées à des circuits de distribution de l'eau, pour projeter l'eau issue du premier réservoir 2 sur le parebrise du véhicule et/ou sur la lunette arrière.

Le premier réservoir 2 est monté dans le véhicule automobile par un premier organe de fixation 50 et un deuxième organe de fixation 52.

Lorsque le premier réservoir 2 est monté dans le véhicule automobile, les deux organes de fixation 50, 52 sont opposés par rapport au premier réservoir 2 dans la direction transversale du véhicule automobile.

Le deuxième organe de fixation 52 est une protubérance en saillie par rapport à la paroi latérale 77 et obtenue d'une pièce avec la première partie de fond 21 du premier réservoir 2. L'organe de fixation 52 est muni d'un système antivibratoire 520 en caoutchouc facilitant le montage de la pièce et limitant les nuisances acoustiques.

Le premier organe de fixation 50 est obtenu d'une pièce avec le premier réservoir 2.

Le premier organe de fixation 50 comprend une deuxième partie de fond 31 et un organe d'accrochage 53 solidaire de la deuxième partie de fond 31.

L'organe d'accrochage 53 comporte un insert 530 métallique permettant d'assurer la bonne fixation du réservoir ainsi que de limiter les vibrations.

La deuxième partie de fond 31 est apte à être assemblée avec un deuxième couvercle 32 pour former un deuxième réservoir 3.

Ici, la deuxième partie de fond 31 s'étend de manière adjacente à la première partie de fond 21, ici dans la direction transversale du véhicule automobile lorsque l'ensemble de réservoirs 1 est monté dans le véhicule automobile.

La deuxième partie de fond 31 s'étend à l'extérieur du premier réservoir 2. Autrement dit la deuxième partie de fond 31 n'est pas un compartiment de la première partie de fond 21 et plus généralement ne fait pas partie intégrante du premier réservoir 2.

Aussi, dans une première configuration, l'ensemble de réservoirs 1 est monté dans le véhicule automobile sans que la deuxième partie de fond 3 ne soit assemblée avec un deuxième couvercle 32. Dans cette première configuration, l'ensemble de réservoirs 1 ne comprend qu'un seul réservoir 2. La première configuration est adaptée au véhicules monocarburant ne nécessitent pas de réservoir additionnel d'essence pour procéder au démarrage à froid.

Dans une deuxième configuration, la deuxième partie de fond 3 est assemblée avec un deuxième couvercle 32 de manière à former le deuxième réservoir 3. Dans cette deuxième configuration, l'ensemble de réservoirs 1 comprend donc deux réservoirs 2, 3.

La deuxième partie de fond 31 comprend une surface de fond principale, 79, destinée à s'étendre dans un plan latéral longitudinal lorsque l'ensemble de réservoirs 1 est monté dans le véhicule automobile. La surface de fond principale 79 de la deuxième partie de fond 31 est bordée par des parois latérales 78 s'étendant localement dans une direction sensiblement perpendiculaire à la surface de fond principale 79.

Les parois latérales 78 de la deuxième partie de fond 31 forment un bord libre, 80, de la deuxième partie de fond 31.

Le deuxième couvercle 32 comprend une surface principale 81 destinée à s'étendre dans un plan latéral longitudinal lorsque l'ensemble de réservoirs 1 est monté dans le véhicule automobile. La surface principale 81 du deuxième couvercle est bordée par des parois latérales, non représentée, s'étendant localement dans une direction sensiblement perpendiculaire à la surface principale 81.

Les parois latérales du deuxième couvercle 32 forment un bord libre, non représenté, du deuxième couvercle 32.

Le deuxième réservoir 3 est formé par la jonction, étanche, du bord libre du deuxième couvercle 32 au bord libre de la deuxième partie de fond 31.

Le deuxième réservoir 3 est destiné à recevoir une quantité d'essence, permettant d'effectuer un démarrage à froid du véhicule automobile à motorisation flex, lorsque le réservoir de carburant principal est rempli principalement d'éthanol et/ou d'essence, et lorsque les conditions de température extérieures sont inférieures à des températures de l'ordre de 15° à 18°.

En effet, dans ces conditions de température, l'éthanol ne permet pas de démarrer le moteur thermique. Il faut donc fournir au moteur une faible quantité d'essence, pour procéder au démarrage. Le deuxième réservoir, aussi appelé réservoir additionnel d'essence, est installé pour fournir cette petite quantité d'essence au moteur au moment du démarrage. Il est bien entendu que le carburant mis dans le deuxième réservoir 3 est un carburant apte à démarrer le moteur dans les conditions de démarrage à froid.

Le deuxième réservoir 3 peut définir un volume d'environ 1 litre d'essence, ce qui est généralement suffisant pour effectuer environ une trentaine de démarrages, à une température de moins de 15° et lorsque le véhicule automobile est rempli, dans son réservoir principal, quasiment à 100% d'éthanol.

Le deuxième réservoir 3 comprend une partie de stockage 38, un deuxième col 39 et une deuxième bouche de remplissage 33 permettant de remplir le réservoir 3.

La description du premier col 29 et de la première bouche de remplissage 23 du premier réservoir 2, est similaire à celle du deuxième col 38 et de la deuxième bouche de remplissage 33 du deuxième réservoir 3.

Cette deuxième bouche de remplissage 33 peut être fermée par un bouchon à carburant 35, de manière amovible au moyen d'un agrafe métallique par exemple.

Le bouchon à carburant 35 assure une fermeture hermétique de la bouche de remplissage 33.

Le bouchon à carburant 35 est amovible, mais n'est pas destiné à être retiré directement par l'utilisateur du véhicule automobile.

Le bouchon à carburant 35 présente la forme d'un réceptacle au fond duquel est ménagé un orifice de remplissage fermé par un bouchon à vis 37.

Le bouchon à vis 37 est destiné à être retiré par l'utilisateur du véhicule pour remplir le réservoir, le bouchon à carburant 35 restant alors monté sur la bouche de remplissage 33.

Le bouchon à carburant 35 comprend aussi une ouverture d'évacuation, non représentée, dans laquelle est fixée une canalisation 36 permettant d'évacuer l'essence qui refluerait en direction du bouchon à carburant 35. Une telle ouverture d'évacuation est bien connue de l'homme du métier.

Ainsi, la canalisation 36 du bouchon à carburant 35 permet l'évacuation du trop-plein d'essence dans le deuxième réservoir 3.

Cette canalisation 36 peut déboucher à son extrémité libre en direction du sol, lorsqu'elle est montée dans le véhicule automobile, de sorte que l'essence évacuée est directement déversée sur la chaussée. Ainsi, on peut éviter que surviennent des fuites de carburant dans le compartiment moteur du véhicule automobile.

Le deuxième réservoir 3 comprend une pompe à carburant 34, ici une pompe à essence 34, permettant d'extraire une partie de l'essence du deuxième réservoir pour alimenter le moteur du véhicule automobile lorsqu'il est nécessaire de procéder au démarrage à froid du moteur flex fuel.

Le deuxième réservoir 3 comprend aussi un capteur de niveau 61, monté au travers du couvercle 32, pour mesurer le niveau de carburant du deuxième réservoir 3. Ainsi lorsque le deuxième réservoir 3 est faiblement rempli, l'utilisateur du véhicule automobile peut être informé du besoin de remplir ce réservoir.

La première partie de fond 21 et l'organe de fixation 50 comprenant la deuxième partie de fond 31 sont obtenus d'une seule pièce, par moulage par injection plastique.

Cependant, les parties de fond 21 et 31 ne partagent ni paroi interne ni paroi externe commune.

Les parois des parties de fond 21 et 31 sont séparées l'une de l'autre.

La première partie de fond 21 est maintenue à distance de la deuxième partie de fond 31 dans la direction latérale du véhicule automobile lorsque l'ensemble de réservoirs 1 est monté dans le véhicule automobile.

En particulier, chaque partie de fond 21, 31 comprend au moins une paroi latérale 71, 72 en regard de l'autre partie de fond 21, 31.

Les parois latérales 71, 72 sont sensiblement parallèles les unes par rapport aux autres, sensiblement verticalement lorsque l'ensemble de réservoirs 1 est monté dans le véhicule automobile.

Une fine langue de matière 40 s'étend entre les parois latérales 71, 72 sensiblement perpendiculairement aux parois latérales 71, 72, de manière à maintenir à distance la première partie de fond 21 de la deuxième partie de fond 31.

Les réservoirs 2 et 3 présentent ainsi des espaces internes de stockages indépendants l'un de l'autre.

Autrement dit, les parties de fond 21 et 31 sont d'une pièce, reliées l'une à l'autre par une fine langue 40 de matière, ici une matière plastique, mais qui peut être tout autre matériau pouvant être obtenu d'une pièce avec la première partie de fond, par exemple un matériau polymère, de la tôle, un métal, ou tout autre matériau adapté.

Cette langue 40 de matière plastique présente des nervures 41 perpendiculaires au plan principal dans lequel s'étend la langue 40.

Les nervures 41 rigidifient la liaison entre la première partie de fond 21 et la deuxième partie de fond 31 de manière à assurer une solidarisation robuste des deux réservoirs 2,3.

L'élément d'accrochage 53 du premier organe de fixation 50 est une patte de fixation 53 obtenue d'une pièce avec la deuxième partie de fond 31, comprenant un trou adapté pour recevoir une vis ou un rivet.

Cependant, tout moyen de fixation adapté pour fixer un réservoir dans un compartiment moteur d'un véhicule automobile peut être utilisé pour constituer l'élément d'accrochage 53.

L'invention permet ainsi d'obtenir d'une pièce une partie de fond, et un moyen de fixation comprenant une autre partie de fond adaptée pour former un deuxième réservoir. De cette manière on peut, à partir d'un seul moule de fabrication, obtenir une structure modulaire pour former un ou deux réservoirs.

Il faut deux moules différents pour fabriquer les deux couvercles de respectivement, le premier réservoir 2 et le deuxième réservoir 3.

En conséquence, il suffit de trois moules différents pour fabriquer un ensemble de réservoir adaptable à un véhicule monocarburant et à un véhicule flex fuel. Ceci permet d'obtenir des coûts de production relativement bas.

Comme la partie de fond 31 du deuxième réservoir n'est pas recouverte par le deuxième couvercle 32 dans la deuxième configuration, de l'eau issue du capot du véhicule, par exemple de l'eau de pluie pénétrant par les aérations, peut s'accumuler dans la deuxième partie de fond 31.

Pour palier ce problème, on effectue une ouverture traversante 60 dans la surface de fond principale 79 de la deuxième partie de fond 31, de manière à permettre l'évacuation de toute quantité d'eau pouvant s'accumuler dans cette deuxième partie de fond 31.

Dans la deuxième configuration, aucune pompe à carburant 34 et aucun bouchon d'essence n'est installé sur la partie de fond 31, puisque le deuxième réservoir 3 n'est pas formé.

Dans cette deuxième configuration, la deuxième partie de fond 31 participe à la fonction de l'organe de fixation 50. En effet la deuxième partie de fond 31 permet d'assurer la fixation robuste du premier réservoir 2 dans l'espace alloué du compartiment moteur du véhicule automobile.

Ainsi, on remarque qu'on peut adapter simplement l'ensemble de réservoirs 1 aux besoins du véhicule automobile, monocarburant ou flex fuel, sans avoir à déplacer les points de fixations des réservoirs à la caisse du véhicule et tout en ayant un process de fabrication commun des réservoirs 2, 3.

## Revendications

1. Ensemble de réservoirs (1) pour véhicule automobile, comprenant un premier réservoir (2) formé par une première partie de fond (21) et un premier couvercle (22) assemblé avec ladite partie de fond (21), **caractérisé en ce que** la première partie de fond (21) est obtenue d'une pièce avec un premier organe de fixation (50) apte à fixer le premier réservoir (2) au véhicule, le premier organe de fixation (50) comprenant une deuxième partie de fond (31) adjacente à la première partie de fond (21) et s'étendant à l'extérieur du premier réservoir (2), et un élément d'accrochage (53) solidaire de ladite deuxième partie de fond (31), ladite deuxième partie de fond (31) comprenant un bord libre (70) apte à recevoir un deuxième couvercle (32) pour former un deuxième réservoir (3), **caractérisé en ce que** les première et deuxième parties de fond (21, 31) comprennent chacune une paroi latérale (71, 72) respectivement en regard l'une de l'autre et maintenues à distance par une fine langue de matière (40) solidaire des parois latérales (71, 72).

2. Ensemble de réservoirs (1) selon la revendication 1, **caractérisé en ce que** la fine langue de matière (40) comprend des nervures (41) s'étendant dans une direction sensiblement perpendiculaire à un plan dans lequel s'étend la langue de matière (40), de manière à renforcer la solidarisation entre les paroi latérale (71, 72) des première et deuxième parties de fond (21, 31).

3. Ensemble de réservoirs (1) selon l'une quelconque des revendications 1 ou 2, **caractérisé en ce que** dans une première configuration, l'ensemble de réservoirs (1) est monté dans le véhicule automobile sans le deuxième couvercle (32).

4. Ensemble de réservoirs (1) selon la revendication 3, **caractérisé en ce que** dans la première configuration, la deuxième partie de fond (31) présente une ouverture traversante (60) adaptée pour évacuer toute substance liquide pouvant s'accumuler dans ladite deuxième partie de fond (31).

5. Ensemble de réservoirs (1) selon l'une quelconque des revendications 1 à 4, **caractérisé en ce que**, dans une deuxième configuration, l'ensemble de réservoirs (1) est monté dans le véhicule automobile avec le deuxième couvercle (32), le deuxième réservoir (3) formé par la deuxième partie de fond (31) et le deuxième couvercle (32) étant adapté pour recevoir une quantité de carburant permettant un démarrage à froid du véhicule automobile.

6. Ensemble de réservoirs (1) selon l'une quelconque des revendications 1 à 5, **caractérisé en ce que** le deuxième réservoir (3) comprend une pompe à carburant (34) pour alimenter un moteur du véhicule automobile lors du démarrage à froid, et un col (38) formé par la jonction d'un bord libre du deuxième couvercle (32) sur le bord libre (70) de la deuxième partie de fond (31) et une bouche de remplissage (33) ménagée dans le deuxième couvercle (32).

7. Ensemble de réservoirs (1) selon l'une quelconque des revendications 1 à 6, **caractérisé en ce que** le premier réservoir (2) comprend une pompe à eau (24) et une bouche de remplissage (23) apte à recevoir un bouchon de fermeture étanche.

8. Ensemble de réservoirs (1) selon la revendication 7, **caractérisé en ce que** le col de remplissage (29) est formé par la jonction d'un bord libre (74) de la première partie de fond (21) avec un bord libre (73) du premier couvercle (22) et **en ce que** la bouche de remplissage (23) est ménagée dans le premier couvercle (22).

9. Véhicule automobile comprenant un ensemble de réservoirs (1) selon l'une quelconque des revendications 1 à 8.

## Patentansprüche

1. Tanksatz (1) für ein Kraftfahrzeug, umfassend einen ersten Tank (2), der von einem ersten Bodenabschnitt (21) und einem ersten Deckel (22), der mit dem Bodenabschnitt (21) zusammengesetzt ist, gebildet ist, **dadurch gekennzeichnet, dass** der erste Bodenabschnitt (21) aus einem Teil mit einem ersten Befestigungselement (50) erhalten ist, das geeignet ist, den ersten Tank (2) am Fahrzeug zu befestigen, wobei das erste Befestigungselement (50) einen zweiten Bodenabschnitt (31), der an den ersten Bodenabschnitt (21) angrenzt und sich außerhalb des ersten Tanks (2) erstreckt, und ein Halterungselement (53), das mit dem zweiten Bodenabschnitt (31) fest verbunden ist, umfasst, wobei der zweite Bodenabschnitt (31) einen freien Rand (70) umfasst, der geeignet ist, einen zweiten Deckel (32) aufzunehmen, um einen zweiten Tank (3) zu bilden, **dadurch gekennzeichnet, dass** der erste und zweite Bodenabschnitt (21, 31) jeweils eine Seitenwand (71, 72) umfassen, die jeweils einander zugewandt sind und durch eine dünne Zunge aus Material (40), die mit den Seitenwänden (71, 72) fest verbunden ist, auf Abstand gehalten werden.

2. Tanksatz (1) nach Anspruch 1, **dadurch gekennzeichnet, dass** die dünne Zunge aus Material (40) Rippen (41) umfasst, die sich in einer Richtung im Wesentlichen senkrecht zu einer Ebene erstrecken, in der sich die Zunge aus Material (40) erstreckt, um die Verbindung zwischen den Seitenwänden (71, 72) des ersten und zweiten Bodenabschnitts (21, 31) zu verstärken.

3. Tanksatz (1) nach einem der Ansprüche 1 oder 2, **dadurch gekennzeichnet, dass** in einer ersten Ausgestaltung der Tanksatz (1) ohne den zweiten Deckel (32) in das Kraftfahrzeug eingebaut ist.

4. Tanksatz (1) nach Anspruch 3, **dadurch gekennzeichnet, dass** in der ersten Ausgestaltung der zweite Bodenabschnitt (31) eine Durchgangsöffnung (60) aufweist, die geeignet ist, jegliche flüssige Substanz abzuleiten, die sich im zweiten Bodenabschnitt (31) sammeln kann.

5. Tanksatz (1) nach einem der Ansprüche 1 bis 4, **dadurch gekennzeichnet, dass** in einer zweiten Ausgestaltung der Tanksatz (1) mit dem zweiten Deckel (32) im Kraftfahrzeug eingebaut ist, wobei der zweite Tank (3), der vom zweiten Bodenabschnitt (31) und den zweiten Deckel (32) gebildet ist, geeignet ist, eine Kraftstoffmenge aufzunehmen, die einen Kaltstart des Kraftfahrzeugs gestattet.

6. Tanksatz (1) nach einem der Ansprüche 1 bis 5, **dadurch gekennzeichnet, dass** der zweite Tank (3) eine Kraftstoffpumpe (34) umfasst, um einen Motor des Kraftfahrzeugs beim Kaltstart zu versorgen, und einen Stutzen (38), der von der Verbindung eines freien Rands des zweiten Deckels (32) auf dem freien Rand (70) des zweiten Bodenabschnitts (31) gebildet ist, und eine Einfüllöffnung (33), die im zweiten Deckel (32) eingerichtet ist.

7. Tanksatz (1) nach einem der Ansprüche 1 bis 6, **dadurch gekennzeichnet, dass** der erste Tank (2) eine Wasserpumpe (24) und eine Einfüllöffnung (23), die geeignet ist, einen dichten Verschlussstopfen aufzunehmen, umfasst.

8. Tanksatz (1) nach Anspruch 7, **dadurch gekennzeichnet, dass** der Einfüllstutzen (29) von der Verbindung eines freien Rands (74) des ersten Bodenabschnitts (21) mit einem freien Rand (73) des ersten Deckels (22) gebildet ist, und dadurch, dass die Einfüllöffnung (23) im ersten Deckel (22) eingerichtet ist.

9. Kraftfahrzeug, umfassend einen Tanksatz (1) nach einem der Ansprüche 1 bis 8.

## Claims

1. Set of tanks (1) for a motor vehicle, comprising a first tank (2) formed by a first bottom part (21) and a first lid (22) assembled with said bottom part (21), **characterized in that** the first bottom part (21) is obtained as one piece with a first fixing member (50) able to fix the first tank (2) to the vehicle, the first fixing member (50) comprising a second bottom part (31) adjacent to the first bottom part (21) and extending on the outside of the first tank (2), and an attachment element (53) secured to said second bottom part (31), said second bottom part (31) comprising a free edge (70) able to accept a second lid (32) to form a second tank (3), **characterized in that** the first and second bottom parts (21, 31) each comprise a side wall (71, 72) respectively facing one another and held apart by a fine tongue (40) of material secured to the side walls (71, 72) .

2. Set of tanks (1) according to Claim 1, **characterized in that** the fine tongue (40) of material comprises ribs (41) extending in a direction substantially perpendicular to a plane in which the tongue (40) of material extends, so as to strengthen the attachment between the side walls (71, 72) of the first and second bottom parts (21, 31).

3. Set of tanks (1) according to either one of Claims 1 and 2, **characterized in that**, in a first configuration, the set of tanks (1) is mounted in the motor vehicle without the second lid (32).

4. Set of tanks (1) according to Claim 3, **characterized in that**, in the first configuration, the second bottom part (31) has a through-opening (60) designed to remove any liquid substance that may accumulate in said second bottom part (31).

5. Set of tanks (1) according to any one of Claims 1 to 4, **characterized in that**, in a second configuration, the set of tanks (1) is mounted in the motor vehicle with the second lid (32), the second tank (3) formed by the second bottom part (31) and the second lid (32) being designed to accept a quantity of fuel allowing cold-starting of the motor vehicle.

6. Set of tanks (1) according to any one of Claims 1 to 5, **characterized in that** the second tank (3) comprises a fuel pump (34) for supplying an engine of the motor vehicle during cold-starting, and a neck (38) formed by the junction of a free edge of the second lid (32) on the free edge (70) of the second bottom part (31) and a filler opening (33) made in the second lid (32).

7. Set of tanks (1) according to any one of Claims 1 to 6, **characterized in that** the first tank (2) comprises a water pump (24) and a filler opening (23) able to accept a sealed-closure cap.

8. Set of tanks (1) according to Claim 7, **characterized in that** the filler neck (29) is formed by the junction of a free edge (74) of the first bottom part (21) with a free edge (73) of the first lid (22) and **in that** the filler opening (23) is formed in the first lid (22).

9. Motor vehicle comprising a set of tanks (1) according to any one of Claims 1 to 8.
